# EUROPÄISCHE PATENTSCHRIFT

(11) **EP 3 494 014 B1**
(45) Veröffentlichungstag und Bekanntmachung des Hinweises auf die Patenterteilung: **05.08.2020**
(21) Anmeldenummer: 17733786.2
(22) Anmeldetag: 21.06.2017
(51) Int. Cl.: B60R 25/24, G07C 9/00

(54) **VERFAHREN ZUM BETREIBEN EINES ZUGANGS- UND STARTSYSTEMS EINES KRAFTFAHRZEUGS SOWIE ZUGANGS- UND STARTSYSTEM FÜR EIN KRAFTFAHRZEUG**
METHOD FOR OPERATING A START AND ENTRY SYSTEM OF A MOTOR VEHICLE AND START AND ENTRY SYSTEM FOR A MOTOR VEHICLE
PROCÉDÉ DE FONCTIONNEMENT D'UN SYSTÈME D'ACCÈS ET DE DÉMARRAGE D'UN VÉHICULE À MOTEUR AINSI QUE SYSTÈME D'ACCÈS ET DE DÉMARRAGE POUR UN VÉHICULE À MOTEUR

(30) Priorität: 03.08.2016 DE 102016214365
(43) Veröffentlichungstag der Anmeldung: 12.06.2019
(73) Patentinhaber: Audi AG, 85045 Ingolstadt (DE)
(72) Erfinder: GEIER, Tobias, 85221 Dachau (DE); FRIEBE, Erik, 85129 Oberdolling (DE)
(86) Internationale Anmeldenummer: PCT/EP2017/065270
(87) Internationale Veröffentlichungsnummer: WO 2018/024399

(56) Entgegenhaltungen:
- EP-A2- 1 336 939
- WO-A1-2013/072471
- WO-A1-2014/091654
- WO-A1-2014/159873
- DE-A1-102014 101 086
- DE-A1-102014 107 186
- DE-A1-102014 112 849
- JP-A- 2015 055 107
- US-A1- 2011 068 895
- US-A1- 2015 371 472

## Beschreibung

Die Erfindung betrifft ein Verfahren zum Betreiben eines Zugangs- und Startsystems eines Kraftfahrzeugs sowie ein Zugangs- und Startsystem für ein Kraftfahrzeug.

Sogenannte schlüssellose Zugangs- und Startsysteme für Kraftfahrzeuge sind an sich bekannt. Bei derartigen Systemen muss ein Benutzer einen Schlüssel, welcher eine Sende- und Empfangseinheit umfasst, lediglich mitführen, um sich Zugang zu seinem Fahrzeug zu verschaffen und kann dann meist durch Betätigung eines Start-Stopp-Knopfs den Motor des Fahrzeugs starten. Das Kraftfahrzeug muss also in derartigen Fällen weder aktiv aufgesperrt werden, noch muss ein Schlüssel in ein Zündschloss des Kraftfahrzeugs gesteckt und umgedreht werden. Ferner sind auch Zugangs- und Startsysteme für Kraftfahrzeuge bekannt, bei welchen man mittels eines Smartphones ein Kraftfahrzeug, entriegeln, verriegeln und starten kann, insbesondere über eine Nahfeldkommunikation zwischen Smartphone und Kraftfahrzeug.

Die DE 10 2014 107 186 A1 zeigt eine Moduleinheit mit einer Schnittstelle für ein Kommunikationsgerät, bei dem es sich beispielsweise um ein Smartphone handeln kann. Die Moduleinheit ist geeignet, Signale eines fahrzeugseitigen Kommunikationsmoduls über eine Funkverbindung zu empfangen und die Signale dem Kommunikationsendgerät zur Verfügung zu stellen.

Die DE 10 2014 112 849 A1 zeigt ein Verfahren zur Fernsteuerung wenigstens einer ersten Funktion einer Sicherheitsvorrichtung eines Fahrzeugs. Zum Fernsteuern dieser wenigstens einen Funktion wird eine Fernsteuervorrichtung, beispielsweise in Form eines Smartphones, vorgeschlagen. Ohne aktive Bedienung der Fernsteuervorrichtung ist es möglich, beispielsweise lediglich durch Berührung eines Türaußengriffs, das Fahrzeug zu entriegeln.

Darüber hinaus ist es auch möglich, solange sich die Fernsteuervorrichtung im Fahrzeuginnenraum befindet, das Fahrzeug über einen Start-Stopp-Taster im Fahrzeuginnenraum zu starten, ohne einen Fahrzeugschlüssel in ein Zündschloss einstecken zu müssen.

Zudem zeigt die DE 10 2014 101 086 A1 ein mobiles Kommunikationsgerät in Form eines Smartphones, mittels welchem über eine Nahfeldkommunikation ein Kraftfahrzeug entriegelt, verriegelt und schlüssellos gestartet werden kann.

Insbesondere wenn ein Kraftfahrzeug sowohl über eine NFC-fähige, also nahfeldkommunikationsfähige, Kommunikationsvorrichtung, beispielsweise in Form eines Smartphones, als auch mittels eines eine Sende- und Empfangseinheit aufweisenden Fahrzeugschlüssels entriegelt, verriegelt und gestartet werden kann, kann es zu teilweise zu unerwünschten Nebeneffekten kommen. Beispielsweise könnte es zu Funktionseinschränkungen oder unberechtigten Anzeigen in einer Anzeigeeinrichtung des Kraftfahrzeugs, wie beispielsweise einem Kombiinstrument, kommen. Zudem können sich auch Nachteile im Hinblick auf den Energieverbrauch ergeben, wenn fortlaufend beide Systeme, also die für die Nahfeldkommunikation und für die Kommunikation mit der Sende- und Empfangseinheit des Fahrzeugschlüssels, aktiv sind.

Es ist daher die Aufgabe der vorliegenden Erfindung, ein Verfahren zum Betreiben eines Zugangs- und Startsystems eines Kraftfahrzeugs sowie ein Zugangs- und Startsystem für ein Kraftfahrzeug bereitzustellen, mittels welchen eine problemlose Betriebsweise des Zugangs- und Startsystems bei einer gleichzeitigen Verwendbarkeit einer Nahfeldkommunikationseinrichtung und eines eine Sende- und Empfangseinheit aufweisenden Fahrzeugschlüssels ermöglicht wird.

Diese Aufgabe wird durch ein Verfahren zum Betreiben eines Zugangs- und Startsystems eines Kraftfahrzeugs sowie durch ein Zugangs- und Startsystem für ein Kraftfahrzeug mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Zugangs- und Startsystems eines Kraftfahrzeugs wird erfasst, ob eine Autorisierung eines Fahrzeugstarts des Kraftfahrzeugs aufgrund eines fahrzeugseitig empfangenen Schlüsselsignals erfolgt ist, welches von einer Sende- und Empfangseinheit eines Fahrzeugschlüssels ausgesendet worden ist, oder ob die Autorisierung des Fahrzeugstarts aufgrund eines fahrzeugseitig empfangenen Nahfeldsignals erfolgt ist, welches von einer Nahfeldkommunikationseinrichtung einer mobilen Kommunikationsvorrichtung ausgesendet worden ist. Mit anderen Worten wird also ermittelt, ob, insbesondere nach Betätigung eines Start-Stopp-Tasters des Kraftfahrzeugs, eine Zündung des Kraftwagens aktiviert bzw. ein Motor des Kraftfahrzeugs gestartet worden ist, weil entweder die Autorisierung mittels einer NFC-fähigen Kommunikationsvorrichtung, beispielsweise in Form eines Smartphones, oder mittels eines eine Sende- und Empfangseinheit aufweisenden Fahrzeugschlüssels bewirkt worden ist. Bei einem Fahrzeugstart werden also zwei Systeme des Kraftfahrzeugs, nämlich einerseits das NFC-System zur Kommunikation mit der Nahfeldkommunikationseinrichtung und andererseits ein Schlüssellesegerät zur Kommunikation mit der Sende- und Empfangseinheit des Schlüssels, abgefragt. Dadurch ist klar, ob der Fahrzeugstart durch eine NFC-Kommunikation oder durch eine Kommunikation mit der Sende- und Empfangseinheit des Fahrzeugschlüssels erfolgt ist.

Falls die Autorisierung des Fahrzeugstarts aufgrund des fahrzeugseitig empfangenen Schlüsselsignals erfolgt ist, wird das Zugangs- und Startsystem in einem Schlüsselbetriebsmodus betrieben, bei welchem nach dem Fahrzeugstart nur das Vorhandensein des Fahrzeugschlüssels in einem Fahrzeuginnenraum des Kraftfahrzeugs überwacht wird. Falls die Autorisierung des Fahrzeugstarts hingegen aufgrund des fahrzeugseitig empfangenen Nahfeldsignals erfolgt ist, wird das Zugangs- und Startsystem in einem Nahfeldbetriebsmodus betrieben, bei welchem nach dem Fahrzeugstart nur das Vorhandensein der die Nahfeldkommunikationseinrichtung aufweisenden mobilen Kommunikationsvorrichtung im Fahrzeuginnenraum überwacht wird.

Dabei kann es vorgesehen sein, dass sowohl im Schlüsselbetriebsmodus als auch im Nahfeldbetriebsmodus die jeweiligen Suchen nach dem Fahrzeugschlüssel bzw. nach der mobilen Kommunikationsvorrichtung im Fahrzeuginnenraum erst begonnen werden, sobald eine vorgegebene Bedingung erfüllt ist, zum Beispiel nachdem eine Tür des Kraftfahrzeugs geöffnet worden ist. Dadurch kann Energie eingespart werden.

Die Betätigung eines Zündanlasstasters, beispielsweise eines Start-Stopp-Knopfes, signalisiert den Startwunsch eines Fahrers und startet gleichzeitig eine Suche nach dem die Sende- und Empfangseinheit aufweisenden Fahrzeugschlüssel, auch als sogenannter Keyless-Schlüssel bezeichnet, oder der die Nahfeldkommunikationseinrichtung aufweisenden mobilen Kommunikationsvorrichtung, beispielsweise in Form eines NFC-fähigen Smartphones. Dasjenige Gerät, also entweder der Schlüssel oder die Kommunikationsvorrichtung, welches zuerst autorisiert wird, definiert den folgenden Betriebsmodus, also ob das Zugangs- und Startsystem im besagten Schlüsselbetriebsmodus oder im Nahfeldbetriebsmodus betrieben wird. Melden sich beide Systeme gleichzeitig, also sowohl die Sende- und Empfangseinheit des Fahrzeugschlüssels als auch die Nahfeldkommunikationseinrichtung der mobilen Kommunikationsvorrichtung, kann optional eine Priorisierung vorgenommen werden, zum Beispiel derart, dass der Fahrzeugschlüssel priorisiert wird, in Folge dessen das Zugangs- und Startsystem im besagten Schlüsselbetriebsmodus betrieben wird.

Dadurch, dass erfindungsgemäß zwischen dem Schlüsselbetriebsmodus und dem Nahfeldbetriebsmodus unterschieden wird, kann entsprechend Energie eingespart werden, da lediglich die Suche entweder nach dem die Sende- und Empfangseinheit aufweisenden Fahrzeugschlüssel oder nach der die Nahfeldkommunikationseinrichtung aufweisenden mobilen Kommunikationsvorrichtung erforderlich ist. Denn sollte nach dem Fahrzeugstart der Fahrzeugschlüssel oder die Kommunikationsvorrichtung aus dem Fahrzeuginnenraum entfernt werden, nachdem der Fahrzeugstart mittels des Fahrzeugschlüssels oder mittels der Kommunikationsvorrichtung bewirkt worden ist, sollte der Fahrer auf diese Umstände hingewiesen werden, da er üblicherweise das Kraftfahrzeug bei Fehlen des Fahrzeugschlüssels bzw. der Kommunikationsvorrichtung nach Abstellen des Motors sonst nicht mehr starten könnte. Mittels des erfindungsgemäßen Verfahrens wird bei einem reduzierten Energieaufwand dennoch sichergestellt, dass der Fahrer rechtzeitig über den Umstand in Kenntnis gesetzt wird, wenn aufgrund einer Entfernung des Fahrzeugschlüssels bzw. der Kommunikationsvorrichtung aus dem Fahrzeuginnenraum ein erneutes Starten des Motors des Kraftfahrzeugs problematisch sein könnte.

Eine vorteilhafte Ausführungsform der Erfindung sieht vor, dass das Zugangs- und Startsystem in einem kombinierten Betriebsmodus betrieben wird, bei welchem fortlaufend nach dem Fahrzeugschlüssel und der mobilen Kommunikationsvorrichtung im Fahrzeuginnenraum gesucht wird, sobald während des Schlüsselbetriebsmodus der Fahrzeugschlüssel oder während des Nahfeldbetriebsmodus die mobile Kommunikationsvorrichtung nicht mehr im Fahrzeuginnenraum detektiert wird. Dieser kombinierte Betriebsmodus wird also dann aktiv bzw. aktiviert, sobald das Gerät, welches zuvor den Schlüsselbetriebsmodus oder den Nahfeldbetriebsmodus bestimmt hat, also entweder der Fahrzeugschlüssel oder die Kommunikationsvorrichtung, nicht mehr im Fahrzeuginnenraum erkannt wird. Während des kombinierten Betriebsmodus wird fortlaufend sowohl eine Suche nach dem Fahrzeugschlüssel als auch nach der Kommunikationsvorrichtung, also zyklisch, durchgeführt. Der Erfindung liegt dabei die Erkenntnis zugrunde, dass während der Fahrt mit einem Kraftfahrzeug es durchaus zu Situationen kommen kann, in denen der Fahrzeugschlüssel oder auch die Kommunikationsvorrichtung aus dem Kraftfahrzeuginnenraum entfernt wird.

Eine weitere vorteilhafte Ausführungsform der Erfindung sieht vor, dass falls nach einer vorgegebenen Suchdauer im kombinierten Betriebsmodus weder der Fahrzeugschlüssel noch die mobile Kommunikationsvorrichtung im Fahrzeuginnenraum detektiert werden, die Suche nach dem Fahrzeugschlüssel und nach der mobilen Kommunikationsvorrichtung bis zum Eintreten einer vorgegebenen Suchbedingung, wie zum Beispiel das Öffnen einer oder mehrerer Fahrzeugtüren, unterbrochen wird. Alternativ ist es auch möglich, dass die Suche nach dem Fahrzeugschlüssel und nach der mobilen Kommunikationsvorrichtung nach einer vorgegebenen Anzahl an Suchen bis zum Erfüllen der vorgegebenen Suchbedingung ausgesetzt bzw. unterbrochen wird. Dadurch kann nach erfolgloser Suche nach dem Fahrzeugschlüssel und der mobilen Kommunikationsvorrichtung solange Energie eingespart werden, bis es wieder wahrscheinlicher ist, dass bei der Suche der Fahrzeugschlüssel und/oder die mobile Kommunikationsvorrichtung im Fahrzeuginnenraum detektiert werden.

In weiterer vorteilhafter Ausgestaltung der Erfindung ist es vorgesehen, dass der kombinierte Betriebsmodus beendet wird und das Zugangs- und Startsystem im Schlüsselbetriebsmodus betrieben wird, sobald während des kombinierten Betriebsmodus der Fahrzeugschlüssel im Fahrzeuginnenraum detektiert worden ist. Denn sobald der Fahrzeugschlüssel im Fahrzeuginnenraum detektiert worden ist, kann problemlos der Schlüsselbetriebsmodus erfolgen, da es in diesem Fall ausreichend ist, zu überwachen, dass der Fahrzeugschlüssel den Fahrzeuginnenraum nicht verlässt.

In diesem Zusammenhang ist es vorzugsweise vorgesehen, dass falls vor dem Wechsel in den kombinierten Betriebsmodus das Zugangs- und Startsystem im Nahfeldbetriebsmodus betrieben worden ist, mittels einer Anzeigeeinrichtung im Kraftfahrzeug der Wechsel des Betriebsmodus in den Schlüsselbetriebsmodus angezeigt wird. Dadurch erkennt insbesondere der Fahrer des Kraftfahrzeugs, dass, obwohl er aufgrund einer Nahfeldkommunikation sein Kraftfahrzeug gestartet hatte, nunmehr nur noch der Schlüssel im Kraftfahrzeuginnenraum detektiert worden ist und er diesen immer mit sich führen sollte, wenn er nach dem Abstellen des Motors des Kraftfahrzeugs den Motor nochmal starten können möchte.

Eine weitere vorteilhafte Ausführungsform der Erfindung sieht vor, dass der kombinierte Betriebsmodus beendet und das Zugangs- und Startsystem im Nahfeldbetriebsmodus betrieben wird, sobald während des kombinierten Betriebsmodus die mobile Kommunikationsvorrichtung im Fahrzeuginnenraum detektiert worden ist. In diesem Fall ist es ausreichend, zu überwachen, ob während der Fahrt mit dem Kraftfahrzeug die mobile Kommunikationsvorrichtung den Fahrzeuginnenraum nicht verlässt, da ansonsten nach Abstellen des Motors ein erneutes Anlassen des Motors nicht möglich wäre, zumindest solange der Fahrer den Fahrzeugschlüssel nicht auch noch mit sich führt.

In diesem Zusammenhang ist es vorzugsweise vorgesehen, dass falls vor dem Wechsel in den kombinierten Betriebsmodus das Zugangs- und Startsystem im Schlüsselbetriebsmodus betrieben worden ist, mittels der Anzeigeeinrichtung im Kraftfahrzeug der Wechsel des Betriebsmodus in den Nahfeldbetriebsmodus angezeigt wird. Dadurch wird der Fahrer des Kraftfahrzeugs darüber in Kenntnis gesetzt, dass er zumindest die mobile Kommunikationsvorrichtung nicht verlieren und immer mit sich führen sollte, da er ansonsten, zumindest wenn er den Fahrzeugschlüssel nicht mehr finden sollte, den Motor des Kraftfahrzeugs nicht mehr anlassen kann.

Gemäß einer weiteren vorteilhaften Ausführungsform der Erfindung ist es vorgesehen, dass solange während des kombinierten Betriebsmodus weder der Fahrzeugschlüssel noch die mobile Kommunikationsvorrichtung im Fahrzeuginnenraum detektiert werden, mittels der Anzeigeeinrichtung im Kraftfahrzeug angezeigt wird, dass sich weder der Fahrzeugschlüssel noch die mobile Kommunikationsvorrichtung im Fahrzeuginnenraum befinden, und der kombinierte Betriebsmodus aufrechterhalten wird. Alternativ ist es auch möglich, dass das Anzeigen der Meldung, dass sich weder der Fahrzeugschlüssel noch die mobile Kommunikationsvorrichtung im Kraftfahrzeuginnenraum befinden, erst nach Überschreiten einer vorgegebenen Suchdauer im kombinierten Betriebsmodus oder nach Überschreiten einer vorgegebenen Anzahl an Suchversuchen im kombinierten Betriebsmodus erfolgt. Der Fahrer wird also auf den Umstand hingewiesen, dass sich im Fahrzeuginnenraum weder der Fahrzeugschlüssel noch die mobile Kommunikationsvorrichtung befinden, sodass er nach einem Ausschalten des Motors des Kraftfahrzeugs diesen nicht mehr starten können wird, sofern er sich nicht wieder Zugang zum Fahrzeugschlüssel oder zur mobilen Kommunikationsvorrichtung verschaffen sollte.

Das erfindungsgemäße Zugangs- und Startsystem für ein Kraftfahrzeug umfasst eine Erfassungseinrichtung, welche dazu ausgelegt ist, zu erfassen, ob eine Autorisierung eines Fahrzeugstarts des Kraftfahrzeugs aufgrund eines fahrzeugseitig empfangenen Schlüsselsignals erfolgt ist, welches von einer Sende- und Empfangseinheit eines Fahrzeugschlüssels ausgesendet worden ist, oder ob die Autorisierung des Fahrzeugstarts aufgrund eines fahrzeugseitig empfangenen Nahfeldsignals erfolgt ist, welches von einer Nahfeldkommunikationseinrichtung einer mobilen Kommunikationsvorrichtung ausgesendet worden ist. Des Weiteren umfasst das erfindungsgemäße Zugangs- und Startsystem eine Steuereinrichtung, welche dazu ausgelegt ist, das Zugangs- und Startsystem in einem Schlüsselbetriebsmodus, bei welchem nach dem Fahrzeugstart nur das Vorhandensein des Fahrzeugschlüssels in einem Fahrzeuginnenraum des Kraftfahrzeugs überwacht wird, zu betreiben, falls die Autorisierung des Fahrzeugstarts aufgrund des fahrzeugseitig empfangenen Schlüsselsignals erfolgt ist. Zudem ist die Steuereinrichtung dazu ausgelegt, das Zugangs- und Startsystem in einem Nahfeldbetriebsmodus zu betreiben, bei welchem nach dem Fahrzeugstart nur das Vorhandensein der mobilen Kommunikationsvorrichtung im Fahrzeuginnenraum überwacht wird, falls die Autorisierung des Fahrzeugstarts aufgrund des fahrzeugseitig empfangenen Nahfeldsignals erfolgt ist. Vorteilhafte Ausgestaltungen des erfindungsgemäßen Verfahrens sind als vorteilhafte Ausgestaltungen des erfindungsgemäßen Zugangs- und Startsystems anzusehen, wobei das Zugangs- und Startsystem insbesondere Mittel zur Durchführung der Verfahrensschritte aufweist.

Das erfindungsgemäße Kraftfahrzeug umfasst das erfindungsgemäße Zugangs- und Startsystem oder eine vorteilhafte Ausführungsform des erfindungsgemäßen Start- und Startsystems.

Weitere Vorteile, Merkmale und Einzelheiten Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines Kraftfahrzeugs, mit einem Zugangs- und Startsystem, welches sowohl mittels eines eine Sende- und Empfangseinheit aufweisenden Fahrzeugschlüssels als auch mittels eines nahfeldkommunikationsfähigen Smartphones gesteuert werden kann, um sich Zugang zum Kraftfahrzeug zu verschaffen und dieses auch zu starten; und in
- Fig. 2: ein Ablaufdiagramm, welches eine Such- und Anzeigestrategie des Zugangs- und Startsystems des Kraftfahrzeugs beschreibt.

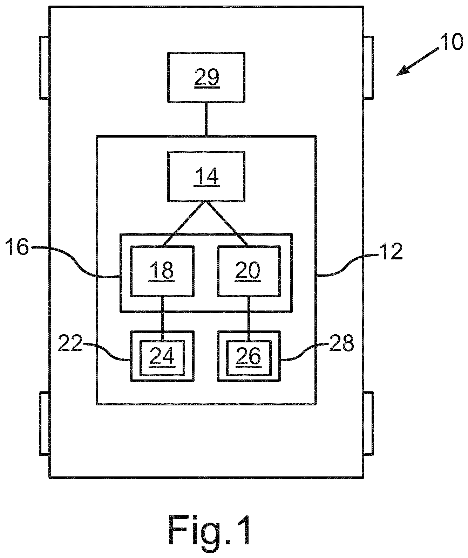

Ein Kraftfahrzeug 10 mit einem Zugangs- und Startsystem 12 ist in einer schematischen Darstellung in Fig. 1 gezeigt. Das Zugangs- und Startsystem 12 umfasst eine Steuereinrichtung 14, eine Erfassungseinrichtung 16 mit einem NFC-Lesegerät 18 sowie mit einem Schlüssellesegerät 20, ein Smartphone 22 mit einer Nahfeldkommunikationseinrichtung 24 und einen eine Sende- und Empfangseinheit 26 aufweisenden Fahrzeugschlüssel 28. Bei dem Zugangs- und Startsystem 12 handelt es sich um ein sogenanntes schlüsselloses Zugangs- und Startsystem. Es ist deswegen schlüssellos, weil ein Benutzer zum Entriegeln, Verriegeln und Starten des Motors des Kraftfahrzeugs 10 nicht aktiv einen Schlüssel verwenden muss.

Möchte er das Kraftfahrzeug 10 aufsperren, so muss er lediglich entweder den Fahrzeugschlüssel 28 nur mit sich führen und beispielsweise einen Türgriff des Kraftfahrzeugs 10 berühren. Dafür kann das Kraftfahrzeug 10 am Türgriff beispielsweise einen kapazitiven Sensor aufweisen. Sobald mittels des kapazitiven Sensors eine Annäherung an den Türgriff bzw. eine Berührung des Türgriffs erfasst worden ist, sendet das Schlüssellesegerät 20 ein Anfragesignal an die Sende- und Empfangseinheit 26 des Fahrzeugschlüssels 28 aus .Ist die Sende- und Empfangseinheit 26 in entsprechender Reichweite, so empfängt er das Anfragesignal, decodiert es und sendet ein Signal mit einer neuen Codierung wieder aus. Im Kraftfahrzeug 10 wird dieses Signal wiederum decodiert und im Falle einer erfolgreichen Authentifizierung wird eine Entriegelung des Kraftfahrzeugs 10 autorisiert.

In gleicher Weise kann der Benutzer auch sein Smartphone 22 beispielsweise an den Türgriff des Kraftfahrzeugs 10 halten, in Folge dessen in gleicher Weise eine Kommunikation zwischen dem NFC-Lesegerät 18 und der smartphoneseitigen Nahfeldkommunikationseinrichtung 24 durchgeführt wird.

Sobald der Benutzer im Kraftfahrzeug 10 Platz genommen hat, kann er einen hier nicht dargestellten Start-Stopp-Knopf drücken, in Folge dessen überprüft wird, ob sich der Fahrzeugschlüssel 28 und/oder das Smartphone 22 im Fahrzeuginnenraum befinden. Sollte sich zumindest eines der beiden Geräte 22, 28 im Fahrzeuginnenraum befinden, so wird nach Betätigung der Start-Stopp-Taste der Motor des Kraftfahrzeugs 10 aktiviert.

Dass der Benutzer das Kraftfahrzeug 10 entriegeln, verriegeln und den Motor des Kraftfahrzeugs 10 sowohl mittels des Smartphones 22 als auch mittels des die Sende- und Empfangseinheit 26 aufweisenden Fahrzeugschlüssels 28 bewirken kann, bringt jedoch nicht nur Vorteile mit sich. Während der Fahrt mit dem Kraftfahrzeug 10 muss sichergestellt werden, dass zumindest entweder das Smartphone 22 oder der Fahrzeugschlüssel 28 vom Fahrer weiterhin mitgeführt wird. Steigt beispielsweise ein weiterer Mitfahrer aus dem Kraftfahrzeug 10 bei laufendem Motor aus und nimmt sowohl das Smartphone 22 als auch den Fahrzeugschlüssel 28 mit, so könnte der Fahrer nach Abstellen des Motors des Kraftfahrzeugs 10 diesen nicht mehr starten. Daher ist es wichtig, dass dem Fahrer, beispielsweise durch eine entsprechende Ansteuerung eines Kombiinstruments 29 mittels der Steuereinrichtung 14 signalisiert wird, wie das Kraftfahrzeug 10 gestartet worden ist und/oder ob das Smartphone 22 oder der Fahrzeugschlüssel 28 gerade aus dem Fahrzeuginnenraum entfernt worden sind.

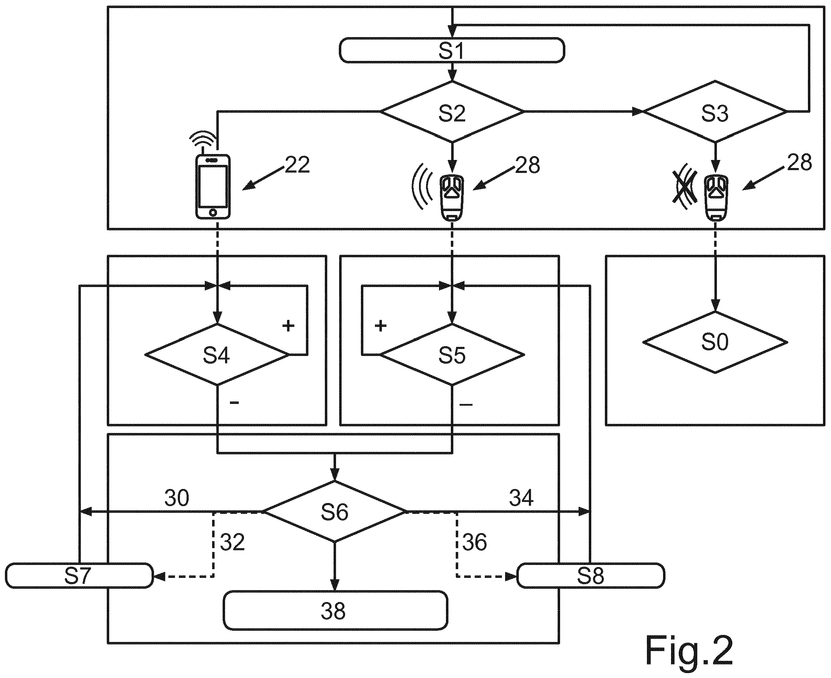

In Fig. 2 ist ein Diagramm gezeigt, welches eine Such- und Anzeigestrategie des Zugangs- und Startsystems 12 näher beschreibt. Mit S1 ist zunächst der Verfahrensschritt gezeigt, bei welchem der Fahrer den Start-Stopp-Knopf betätigt. In Folge dessen wird in einem Verfahrensschritt S2 überprüft, ob ein Fahrzeugstart des Kraftfahrzeugs 10 aufgrund der zuvor beschriebenen Kommunikation über das Smartphone 22 durch Nahfeldkommunikation oder über die Sende- und Empfangseinheit 26 des Fahrzeugschlüssels 28 erfolgt ist. Ist nach Betätigung der Start-Stopp-Taste weder eine Antwort von Seiten des Smartphones 22 noch von Seiten des Fahrzeugschlüssels 28 eingegangen, so wird der Fahrer im Verfahrensschritt S3 dazu aufgefordert, den Fahrzeugschlüssel 28 an eine fahrzeugseitige Transponderspule zu halten, um das Kraftfahrzeug 10 zu starten. Dies kann beispielsweise erforderlich sein, wenn eine Batterie des Fahrzeugschlüssels 28 leer ist und dadurch die Sende- und Empfangseinheit 26 nicht mehr mit Strom versorgt werden kann. Um in einem derartigen Fall dennoch ein Starten des Kraftfahrzeugs 10 zu ermöglichen, weist der Fahrzeugschlüssel 28 noch einen nicht näher dargestellten Transponder auf. Sobald der Fahrzeugschlüssel 28 an die fahrzeugseitige Transponderspule gehalten wird, wird im Transponder eine Spannung induziert, infolgedessen dieser ebenfalls das zum Starten des Kraftfahrzeugs 10 erforderliche Schlüsselsignal aussenden kann.

Falls die Autorisierung des Fahrzeugstarts aufgrund des fahrzeugseitig vom Transponder empfangenen Schlüsselsignals erfolgt ist, wird das Zugangs- und Startsystem 12 mittels der Steuereinrichtung 14 in einem Transpondermodus S0 betrieben. Im Transpondermodus S0 kann es vorgesehen sein, dass nach dem Fahrzeugstart zunächst weder das Vorhandensein des Fahrzeugschlüssels 28 noch des Smartphones 22 in einem Fahrzeuginnenraum des Kraftfahrzeugs 10 überwacht wird. Sobald jedoch eine vorgegebene Suchbedingung, wie z.B. das Öffnen einer Fahrzeugtür, erfasst worden ist, kann es vorgesehen sein, dass nach einem weiteren Fahrzeugschlüssel mit Sende- und Empfangseinheit, welche zum Autorisieren des Fahrzeugstarts eingerichtet ist, und/oder nach dem Smartphone 22, welches zum Autorisieren des Fahrzeugstarts eingerichtet ist, im Fahrzeuginnenraum gesucht wird. Wird das Smartphone 22 gefunden, wird in den Verfahrensschritt S4 gewechselt, wobei falls der weitere Fahrzeugschlüssel gefunden wird, in den Verfahrensschritt S5 gewechselt wird.

Falls die Autorisierung des Fahrzeugstarts aufgrund eines fahrzeugseitig vom Smartphone 22, genauer von der Nahfeldkommunikationseinrichtung 24 des Smartphones 22, empfangenen Signals erfolgt ist, wird das Zugangs- und Startsystem 12 mittels der Steuereinrichtung 14 in einem Nahfeldbetriebsmodus S4 betrieben, bei welchem nach dem Fahrzeugstart nur das Vorhandensein des Smartphones 22 im Fahrzeuginnenraum überwacht wird. Solange festgestellt wird, dass sich das Smartphone 22 im Fahrzeuginnenraum befindet, vorliegend durch das Plus-Symbol gekennzeichnet, verbleibt das Zugangs- und Startsystem 12 im Nahfeldbetriebsmodus S4.

Sollte hingegen im Zuge des Verfahrensschritts S2 festgestellt worden sein, dass die Autorisierung des Fahrzeugstarts aufgrund des fahrzeugseitig empfangenen Schlüsselsignals von der Sende- und Empfangseinheit 26 des Fahrzeugschlüssels 28 erfolgt ist, so betreibt die Steuereinrichtung 14 das Zugangs- und Startsystem 12 in einem Schlüsselbetriebsmodus S5, bei welchem nach dem Fahrzeugstart nur das Vorhandensein des Fahrzeugschlüssels 28 im Fahrzeuginnenraum überwacht wird. Solange während des Schlüsselbetriebsmodus S5 der Fahrzeugschlüssel 28 im Fahrzeuginnenraum detektiert wird, durch ein Plus-Symbol gekennzeichnet, wird der Schlüsselbetriebsmodus von der Steuereinrichtung 14 aufrechterhalten.

Das Zugangs- und Startsystem 12 wird mittels der Steuereinrichtung 14 in einen kombinierten Betriebsmodus S6 versetzt, bei welchem fortlaufend nach dem Fahrzeugschlüssel 28 und dem Smartphone 22 im Fahrzeuginnenraum gesucht wird, sobald während des Schlüsselbetriebsmodus S5 der Fahrzeugschlüssel 28 oder während des Nahfeldbetriebsmodus S4 das Smartphone 22 nicht mehr im Fahrzeuginnenraum detektiert wird, im Diagramm mit einem Minus-Symbol gekennzeichnet.

Während des Betriebs des Zugangs- und Startsystems 12 im kombinierten Betriebsmodus S6 gibt es eine Vielzahl verschiedener Möglichkeiten, das Zugangs- und Startsystems 12 zu steuern. Eine erste Möglichkeit 30 ist, dass vom Nahfeldbetriebsmodus S4 kommend während des kombinierten Betriebsmodus S6 das Smartphone 22 wieder im Fahrzeuginnenraum gefunden wird. In dem Fall wird der kombinierte Betriebsmodus S6 beendet und die Steuereinrichtung 14 betreibt das Zugangs- und Startsystem 12 dann wieder im Nahfeldbetriebsmodus S4.

Eine weitere Möglichkeit 32 ist, dass vom Schlüsselbetriebsmodus S5 kommend während des kombinierten Betriebsmodus S6 das Smartphone 22 im Fahrzeuginnenraum detektiert, der Fahrzeugschlüssel 28 jedoch nicht gefunden wird. In dem Fall wird ebenfalls der kombinierte Betriebsmodus S6 beendet und der Nahfeldbetriebsmodus S4 gestartet, wobei in einem weiteren Verfahrensschritt S7 im Kombiinstrument 29 des Kraftfahrzeugs 10 signalisiert wird, dass ein Wechsel vom ursprünglichen Schlüsselbetriebsmodus S5 zum Nahfeldbetriebsmodus S4 vollzogen worden ist.

Insbesondere der Fahrer des Kraftfahrzeugs 10 kann dadurch erkennen, dass er zwar mittels des die Sende- und Empfangseinheit 26 aufweisenden Fahrzeugschlüssels 28 sein Kraftfahrzeug 10 gestartet hat, sich allerdings der Fahrzeugschlüssel 28 nicht mehr im Fahrzeuginnenraum befindet, er insbesondere deswegen darauf aufpassen sollte, nicht auch noch das Smartphone 22 aus dem Fahrzeuginnenraum zu entfernen. Denn solange er das Smartphone 22 mit sich trägt kann er über die bereits beschriebene Nahfeldkommunikation auch nach einem Abstellen des Motors des Kraftfahrzeugs 10 den Motor wieder starten.

Eine weitere Möglichkeit 34 während des kombinierten Betriebsmodus S6 besteht darin, dass vom Schlüsselbetriebsmodus S5 kommend der Fahrzeugschlüssel 28 wieder im Fahrzeuginnenraum detektiert wird. In diesem Fall wird der kombinierte Betriebsmodus S6 beendet und das Zugangs- und Startsystem 12 wieder in den Schlüsselbetriebsmodus S5 versetzt.

Die Möglichkeit 36 beschreibt den Fall, dass während des kombinierten Betriebsmodus S6 vom Nahfeldbetriebsmodus S4 kommend der Fahrzeugschlüssel 28 zwar detektiert, das Smartphone 22, mittels welchem über die Nahfeldkommunikation der Fahrzeugstart hervorgerufen worden ist, jedoch nicht detektiert werden kann. In dem Fall wird ebenfalls der kombinierte Betriebsmodus S6 beendet und das Zugangs- und Startsystem 12 in den Schlüsselbetriebsmodus S5 versetzt. In einem weiteren Verfahrensschritt S8 wird zudem wiederum mittels des Kombiinstruments 29 dem Fahrer signalisiert, dass ein Wechsel des Betriebsmodus in den Schlüsselbetriebsmodus S5 erfolgt ist. Im Verfahrensschritt S8 wird also dem Fahrer des Kraftfahrzeugs 10 kenntlich gemacht, dass er zwar ursprünglich einen Start des Kraftahrzeugs 10, genauer des Motors, über Nahfeldkommunikation mit seinem Smartphone 22 autorisiert hat, sich jedoch das Smartphone 22 nicht mehr im Fahrzeuginnenraum befindet. Stattdessen befindet sich aber noch der Fahrzeugschlüssel 28 mit der Sende- und Empfangseinheit 26 im Fahrzeuginnenraum, sodass der Fahrer darauf aufmerksam gemacht wird, dass er den Fahrzeugschlüssel 28 nicht auch noch verlieren bzw. diesen weiter mit sich führen sollte, wenn er nach dem Abstellen des Motors diesen wieder starten können möchte.

Schließlich gibt es noch eine weitere Möglichkeit 38, nämlich dass während des kombinierten Betriebsmodus S6 weder das Smartphone 22 noch der Fahrzeugschlüssel 28 im Fahrzeuginnenraum detektiert werden. In diesem Fall wird der Fahrer durch eine entsprechende Anzeige im Kombiinstrument 29 über diesen Umstand informiert, sodass der Fahrer darüber in Kenntnis gesetzt wird, dass er nach einem Abstellen des Motors des Kraftfahrzeugs 10 diesen nicht mehr aktivieren können wird, es sei denn, er beschafft sich wieder das Smartphone 22 und/oder den Fahrzeugschlüssel 28.

Mittels des erläuterten Verfahrens zum Betreiben des Zugangs- und Startsystems 12 wird also ein Fahrer zuverlässig und gezielt auf einen Verlust des Fahrzeugschlüssels 28 bzw. des nahfeldkommunikationsfähigen Smartphones 22 hingewiesen. Zudem wird ein Wechsel zwischen dem Schlüsselbetriebsmodus S5 und dem Nahfeldbetriebsmodus S4 erkannt und dem Fahrer mittels entsprechender Einblendung im Kombiinstrument 29 angezeigt. Der Energiebedarf des Kraftfahrzeugs 10 kann durch die beschriebene Ansteuerung des Zugangs- und Startsystems 12 optimiert werden, da nicht fortlaufend sowohl nach dem Smartphone 22 als auch nach dem Fahrzeugschlüssel 28 gesucht werden muss, zumindest solange wie im Nahfeldbetriebsmodus S4 bzw. im Schlüsselbetriebsmodus S5 das Smartphone 22 bzw. der Fahrzeugschlüssel 28 im Fahrzeuginnenraum detektiert werden.

## Patentansprüche

1. Verfahren zum Betreiben eines Zugangs- und Startsystems (12) eines Kraftfahrzeugs (10), mit den Schritten
- Erfassen, ob eine Autorisierung eines Fahrzeugstarts des Kraftfahrzeugs (10) aufgrund eines fahrzeugseitig empfangenen Schlüsselsignals erfolgt ist, welches von einer Sende- und Empfangseinheit (26) eines Fahrzeugschlüssels (28) ausgesendet worden ist, oder ob die Autorisierung des Fahrzeugstarts aufgrund eines fahrzeugseitig empfangenen Nahfeldsignals erfolgt ist, welches von einer Nahfeldkommunikationseinrichtung (24) einer mobilen Kommunikationsvorrichtung (22) ausgesendet worden ist;
- falls die Autorisierung des Fahrzeugstarts aufgrund des fahrzeugseitig empfangenen Schlüsselsignals erfolgt ist: Betreiben des Zugangs- und Startsystems (12) in einem Schlüsselbetriebsmodus (S5), bei welchem nach dem Fahrzeugstart nur das Vorhandensein des Fahrzeugschlüssels (28) in einem Fahrzeuginnenraum des Kraftfahrzeugs (10) überwacht wird;
- falls die Autorisierung des Fahrzeugstarts aufgrund des fahrzeugseitig empfangenen Nahfeldsignals erfolgt ist: Betreiben des Zugangs- und Startsystems (12) in einem Nahfeldbetriebsmodus (S4), bei welchem nach dem Fahrzeugstart nur das Vorhandensein der mobilen Kommunikationsvorrichtung (22) im Fahrzeuginnenraum überwacht wird.

2. Verfahren nach Anspruch 1,
**dadurch gekennzeichnet, dass**
das Zugangs- und Startsystem (12) in einem kombinierten Betriebsmodus (S6) betrieben wird, bei welchem fortlaufend nach dem Fahrzeugschlüssel (28) und der mobilen Kommunikationsvorrichtung (22) im Fahrzeuginnenraum gesucht wird, sobald während des Schlüsselbetriebsmodus (S5) der Fahrzeugschlüssel (28) oder während des Nahfeldbetriebsmodus (S4) die mobile Kommunikationsvorrichtung (22) nicht mehr im Fahrzeuginnenraum detektiert wird.

3. Verfahren nach Anspruch 2,
**dadurch gekennzeichnet, dass**
falls nach einer vorgegebenen Suchdauer im kombinierten Betriebsmodus (S6) weder der Fahrzeugschlüssel (28) noch die mobile Kommunikationsvorrichtung (22) im Fahrzeuginnenraum detektiert werden, die Suche nach dem Fahrzeugschlüssel (28) und nach der mobilen Kommunikationsvorrichtung (22) bis zum Eintreten einer vorgegebenen Suchbedingung unterbrochen wird.

4. Verfahren nach Anspruch 2 oder 3,
**dadurch gekennzeichnet, dass**
der kombinierte Betriebsmodus (S6) beendet und das Zugangs- und Startsystem (12) im Schlüsselbetriebsmodus (S5) betrieben wird, sobald während des kombinierten Betriebsmodus (S6) der Fahrzeugschlüssel (28) im Fahrzeuginnenraum detektiert worden ist.

5. Verfahren nach Anspruch 4,
**dadurch gekennzeichnet, dass**
falls vor dem Wechsel in den kombinierten Betriebsmodus (S6) das Zugangs- und Startsystem (12) im Nahfeldbetriebsmodus (S4) betrieben worden ist, mittels einer Anzeigeeinrichtung (29) im Kraftfahrzeug (10) der Wechsel des Betriebsmodus in den Schlüsselbetriebsmodus (S5) angezeigt wird.

6. Verfahren nach einem der Ansprüche 2 bis 5,
**dadurch gekennzeichnet, dass**
der kombinierte Betriebsmodus (S6) beendet und das Zugangs- und Startsystem (12) im Nahfeldbetriebsmodus (S4) betrieben wird, sobald während des kombinierten Betriebsmodus (S6) die mobile Kommunikationsvorrichtung (22) im Fahrzeuginnenraum detektiert worden ist.

7. Verfahren nach Anspruch 6,
**dadurch gekennzeichnet, dass**
falls vor dem Wechsel in den kombinierten Betriebsmodus (S6) das Zugangs- und Startsystem (12) im Schlüsselbetriebsmodus (S5) betrieben worden ist, mittels der Anzeigeeinrichtung (29) im Kraftfahrzeug (10) der Wechsel des Betriebsmodus (S6) in den Nahfeldbetriebsmodus (S4) angezeigt wird.

8. Verfahren nach einem der Ansprüche 2 bis 7,
**dadurch gekennzeichnet, dass**
solange während des kombinierten Betriebsmodus (S6) weder der Fahrzeugschlüssel (28) noch die mobile Kommunikationsvorrichtung (22) im Fahrzeuginnenraum detektiert werden, mittels der Anzeigeeinrichtung (29) im Kraftfahrzeug (10) angezeigt wird, dass sich weder der Fahrzeugschlüssel (28) noch die mobile Kommunikationsvorrichtung (22) im Fahrzeuginnenraum befinden, und der kombinierte Betriebsmodus (S6) aufrecht erhalten wird.

9. Zugangs- und Startsystem (12) für ein Kraftfahrzeug (10), umfassend
- eine Erfassungseinrichtung (16), welche dazu ausgelegt ist, zu erfassen, ob eine Autorisierung eines Fahrzeugstarts des Kraftfahrzeugs (10) aufgrund eines fahrzeugseitig empfangenen Schlüsselsignals erfolgt ist, welches von einer Sende- und Empfangseinheit (26) eines Fahrzeugschlüssels (28) ausgesendet worden ist, oder ob die Autorisierung des Fahrzeugstarts aufgrund eines fahrzeugseitig empfangenen Nahfeldsignals erfolgt ist, welches von einer Nahfeldkommunikationseinrichtung (24) einer mobilen Kommunikationsvorrichtung (22) ausgesendet worden ist;
- eine Steuereinrichtung (14), welche dazu ausgelegt ist, das Zugangs- und Startsystem (12) in einem Schlüsselbetriebsmodus (S5), bei welchem nach dem Fahrzeugstart nur das Vorhandensein des Fahrzeugschlüssels (28) in einem Fahrzeuginnenraum des Kraftfahrzeugs (10) überwacht wird, zu betreiben, falls die Autorisierung des Fahrzeugstarts aufgrund des fahrzeugseitig empfangenen Schlüsselsignals erfolgt ist, und das Zugangs- und Startsystem (12) in einem Nahfeldbetriebsmodus (S4) zu betreiben, bei welchem nach dem Fahrzeugstart nur das Vorhandensein der mobilen Kommunikationsvorrichtung (22) im Fahrzeuginnenraum überwacht wird, falls die Autorisierung des Fahrzeugstarts aufgrund des fahrzeugseitig empfangenen Nahfeldsignals erfolgt ist.

10. Kraftfahrzeug (10) mit einem Zugangs- und Startsystem (12) nach Anspruch 9.

## Claims

1. Method for operating a start and entry system (12) of a motor vehicle (10), comprising the steps of:
- detecting whether an authorisation of starting the motor vehicle (10) has occurred on the basis of a key signal received on-board the vehicle, which has been sent from a transmitting and receiving unit (26) of a vehicle key (28), or whether the authorisation of starting the vehicle has occurred on the basis of a near-field signal received on-board the vehicle, which has been sent out by a near-field communication system (24) of a mobile communication device (22);
- if the authorisation of starting the vehicle has occurred on the basis of the key signal received on-board the vehicle: operating the start and entry system (12) in a key operating mode (S5), in which, following the starting of the vehicle, only the availability of the vehicle key (28) in a vehicle interior of the motor vehicle (10) is monitored;
- if the authorisation of the starting of the vehicle has occurred on the basis of the near-field signal received on-board the vehicle: operating the start and entry system (12) in a near-field operating mode (S4) in which, following the starting of the vehicle, only the availability of the mobile communication device (22) in the vehicle interior is monitored.

2. Method according to claim 1,
**characterised in that**
the start and entry system (12) is operated in a combined operating mode (S6), in which a search for the vehicle key (28) and the mobile communication device (22) is carried out continuously in the vehicle interior, as soon as the vehicle key (28), in the key operating mode (S5), or the mobile communication device (22), in the near-field operating mode (S4), is no longer detected in the vehicle interior.

3. Method according to claim 2,
**characterised in that**
if, after a predetermined search duration in the combined operating mode (S6), neither the vehicle key (28) nor the mobile communication device (22) are detected in the vehicle interior, the search for the vehicle key (28) and for the mobile communication device (22) is interrupted until a predetermined search condition occurs.

4. Method according to claim 2 or 3,
**characterised in that**
the combined operating mode (S6) is terminated and the start and entry system (12) is operated in the key operating mode (S5) as soon as the vehicle key (28) has been detected in the vehicle interior in the combined operating mode (S6).

5. Method according to claim 4,
**characterised in that**
if the start and entry system (12) has been operated in the near-field operating mode (S4) before the switch to the combined operating mode (S6), the switch of the operating mode to the key operating mode (S5) is displayed by a display device (29) in the motor vehicle (10).

6. Method according to any of claims 2 to 5,
**characterised in that**
the combined operating mode (S6) is terminated and the start and entry system (12) is operated in the near-field operating mode (S4) as soon as the mobile communication device (22) has been detected in the vehicle interior in the combined operating mode (S6).

7. Method according to claim 6,
**characterised in that**
if the start and entry system (12) has been operated in the key operating mode (S5) before the switch to the combined operating mode (S6), the switch of the operating mode (S6) to the near-field operating mode (S4) is displayed by the display device (29) in the motor vehicle (10).

8. Method according to any of claims 2 to 7,
**characterised in that**
as long as neither the vehicle key (28) nor the mobile communication device (22) is detected in the vehicle interior in the combined operating mode (S6), a display is provided by means of the display device (29) in the motor vehicle (10), indicating that neither the vehicle key (28) nor the mobile communication device (22) is located in the vehicle interior and that the combined operating mode (S6) is maintained.

9. Start and entry system (12) for a motor vehicle (10), comprising:
- a detection device (16) which is designed to detect whether an authorisation of starting the motor vehicle (10) has occurred on the basis of a key signal received on-board the vehicle, which has been sent by a transmitting and receiving unit (26) of a vehicle key (28), or whether the authorisation of starting the vehicle has occurred on the basis of a near-field signal received on-board the vehicle, which has been sent out by a near-field communication system (24) of a mobile communication device (22);
- a control device (14) which is designed to operate the start and entry system (12) in a key operating mode (S5), in which, after the starting of the vehicle, only the availability of the vehicle key (28) in a vehicle interior of the motor vehicle (10) is monitored, if the authorisation of starting the vehicle has occurred on the basis of a key signal received on-board the vehicle, and to operate the start and entry system (12) in a near-field operating mode (S4), in which, after starting the vehicle, only the availability of the mobile communication device (22) in the vehicle interior is monitored, if the authorisation of the starting of the vehicle has occurred on the basis of the near-field signal received on-board the vehicle.

10. Motor vehicle (10) with a start and entry system (12) according to claim 9.

## Revendications

1. Procédé de fonctionnement d'un système d'accès et de démarrage (12) d'un véhicule à moteur (10), comprenant les étapes consistant à :
- détecter, si une autorisation d'un démarrage du véhicule à moteur (10) a été effectuée en raison d'un signal de la clé reçu côté véhicule, lequel a été émis à partir d'une unité d'émission et de réception (26) d'une clé du véhicule (28) ou, si l'autorisation du démarrage du véhicule a été effectuée en raison d'un signal du champ proche reçu côté véhicule, lequel a été émis par un dispositif de communication en champ proche (24) d'un dispositif de communication mobile (22) ;
- si l'autorisation du démarrage du véhicule a été effectuée en raison du signal de la clé reçu côté véhicule : faire fonctionner le système d'accès et de démarrage (12) dans un mode de fonctionnement avec la clé (S5), dans lequel, après le démarrage du véhicule, seulement la présence de la clé du véhicule (28), à l'intérieur d'un habitacle du véhicule à moteur (10), est surveillée ;
- si l'autorisation du démarrage du véhicule a été effectuée en raison du signal du champ proche reçu côté véhicule : faire fonctionner le système d'accès et de démarrage (12) dans un mode de fonctionnement en champ proche (S4), dans lequel, après le démarrage du véhicule, seulement la présence du dispositif de communication mobile (22), à l'intérieur de l'habitacle du véhicule, est surveillée.

2. Procédé selon la revendication 1, **caractérisé en ce que**
le système d'accès et de démarrage (12) fonctionne dans un mode de fonctionnement combiné (S6), dans lequel la clé du véhicule (28) et le dispositif de communication mobile (22) sont continuellement recherchés dans l'habitacle du véhicule dès que la clé du véhicule (28) n'est plus détectée dans l'habitacle du véhicule pendant le mode de fonctionnement avec la clé (S5) ou que le dispositif de communication mobile (22) n'est plus détecté dans l'habitacle du véhicule pendant le mode de fonctionnement en champ proche (S4).

3. Procédé selon la revendication 2, **caractérisé en ce que**
si, après une durée de recherche prédéterminée dans le mode de fonctionnement combiné (S6), ni la clé du véhicule (28) ni le dispositif de communication mobile (22) ne sont détectés dans l'habitacle du véhicule, la recherche de la clé du véhicule (28) et du dispositif de communication mobile (22) est interrompue jusqu'à ce qu'une condition de recherche prédéterminée se produise.

4. Procédé selon la revendication 2 ou 3, **caractérisé en ce que**
le mode de fonctionnement combiné (S6) est interrompu et le système d'accès et de démarrage (12) fonctionne dans le mode de fonctionnement avec la clé (S5) dès que la clé du véhicule (28) a été détectée dans l'habitacle du véhicule pendant le mode de fonctionnement combiné (S6).

5. Procédé selon la revendication 4, **caractérisé en ce que**
si le système d'accès et de démarrage (12) a été utilisé en mode de fonctionnement en champ proche (S4) avant le passage au mode de fonctionnement combiné (S6), le passage du mode de fonctionnement au mode de fonctionnement avec la clé (S5) est indiqué au moyen d'un dispositif d'affichage (29) dans le véhicule à moteur (10).

6. Procédé selon l'une quelconque des revendications 2 à 5, **caractérisé en ce que**
le mode de fonctionnement combiné (S6) est interrompu et le système d'accès et de démarrage (12) fonctionne dans le mode de fonctionnement en champ proche (S4) dès que le dispositif de communication mobile (22) a été détecté dans l'habitacle du véhicule pendant le mode de fonctionnement combiné (S6).

7. Procédé selon la revendication 6, **caractérisé en ce que**
si le système d'accès et de démarrage (12) a été utilisé dans le mode de fonctionnement avec la clé (S5) avant le passage au mode de fonctionnement combiné (S6), le passage du mode de fonctionnement (S6) au mode de fonctionnement en champ proche (S4) est indiqué au moyen du dispositif d'affichage (29) dans le véhicule à moteur (10).

8. Procédé selon l'une quelconque des revendications 2 à 7, **caractérisé en ce que**
tant que pendant le mode de fonctionnement combiné (S6), ni la clé du véhicule (28) ni le dispositif de communication mobile (22) ne sont détectés dans l'habitacle du véhicule, il est indiqué au moyen du dispositif d'affichage (29) dans le véhicule à moteur (10) que ni la clé du véhicule (28) ni le dispositif de communication mobile (22) ne se trouvent dans l'habitacle du véhicule, et le mode de fonctionnement combiné (S6) est maintenu.

9. Système d'accès et de démarrage (12) pour un véhicule à moteur (10), comprenant
- un dispositif de détection (16) qui est conçu pour détecter, si une autorisation d'un démarrage du véhicule à moteur (10) a été effectuée en raison d'un signal de la clé reçu côté véhicule, lequel a été émis à partir d'une unité d'émission et de réception (26) d'une clé du véhicule (28) ou, si l'autorisation du démarrage du véhicule a été effectuée en raison d'un signal du champ proche reçu côté véhicule, lequel a été émis par un dispositif de communication en champ proche (24) d'un dispositif de communication mobile (22) ;
- un dispositif de commande (14) qui est conçu pour faire fonctionner le système d'accès et de démarrage (12) dans un mode de fonctionnement avec la clé (S5), dans lequel, après le démarrage du véhicule, seulement la présence de la clé du véhicule (28), à l'intérieur d'un habitacle du véhicule à moteur (10), est surveillée, si l'autorisation du démarrage du véhicule a été effectuée en raison du signal de la clé reçu côté véhicule, et pour faire fonctionner le système d'accès et de démarrage (12) dans un mode de fonctionnement en champ proche (S4), dans lequel, après le démarrage du véhicule, seulement la présence du dispositif de communication mobile (22), à l'intérieur de l'habitacle du véhicule, est surveillée, si l'autorisation du démarrage du véhicule a été effectuée en raison du signal du champ proche reçu côté véhicule.

10. Véhicule à moteur (10) avec un système d'accès et de démarrage (12) selon la revendication 9.
